# EUROPEAN PATENT APPLICATION

(11) **EP 4 697 560 A1**
(43) Date of publication of application: **18.02.2026**
(21) Application number: 24788431.5
(22) Date of filing: 22.02.2024
(51) Int. Cl.: H02J 50/20, H02J 7/00, H02J 7/02, H02J 7/04, H02J 7/10, H04B 5/48

(54) **RECEIVER AND WIRELESS POWER SUPPLY SYSTEM**

(30) Priority: 10.04.2023 JP 2023063317
(71) Applicant: Aeterlink Corp., Tokyo 100-0005 (JP)
(72) Inventor: KUBOUCHI, Tomohiro, Tokyo 100-0005 (JP); KODATE, Naoto, Tokyo 100-0005 (JP)
(74) Representative: Feder Walter Ebert
(86) International application number: PCT/JP2024/006421
(87) International publication number: WO 2024/214401

(57) **Abstract**

A receiver 200 that wirelessly receives transmitting power composed of AC signals, the receiver 200 comprising: a rectifier202 that rectifies the transmitting power; a power management unit 203 that manages a rectified voltage from the rectifier202; a charging unit 204 that is charged with an output voltage from the power management unit 203; and a control unit 205 that operates on a power supplied from the charging unit 204 and controls the entire receiver 200, wherein the charging unit 204 includes a plurality of capacitors and performs charging of one of the plurality of capacitors until a predetermined time from a start of receiving the transmitting power, and after the predetermined time also performs charging of another capacitor other than the one capacitor.

## Description

### [Technical Field]

### [CROSS-REFERENCE TO RELATED APPLICATIONS]

This application claims priority to International Application No. PCT/JP2024/006421, entitled " RECEIVER AND WIRELESS POWER SUPPLY SYSTEM," filed on February 22, 2024, and the contents of which is incorporated herein by reference in its entirety.

The present disclosure relates to a receiver and a wireless power supply system.

### [Background]

There is a technology related to a charging device including: a power acquisition unit that charges a first power storage unit with a voltage supplied from outside; and a power transfer unit that transfers the electric power stored in the first power storage unit to a second power storage unit having a larger capacity than the first power storage unit and stores the electric power, wherein the power transfer unit includes a voltage drop suppression unit that suppresses a voltage drop per time in the first power storage unit when the electric power is transferred from the first power storage unit to the second power storage unit (Patent Document 1).

### [Citation List]

### [Patent Literature]

[Patent Literature 1] JP 2016-226130

### [Summary of the Invention]

### [Technical Problem]

A wireless power supply system is known that uses microwaves to supply substantially continuous power from a transmitter to a receiver. In such a wireless power supply system, there is a need to quickly secure an operation voltage of a control circuit for controlling a receiver at the beginning of wireless power supply from the transmitter, while there is also a need to continue stable operation of the receiver even if the wireless power supply from the transmitter is interrupted.

However, the technique disclosed in Reference 1 relates to an electronic device to which operating power is supplied from outside by RFID technology. Therefore, since the operating power supplied from the external device in Patent Document 1 is not continuous, it is difficult to cope with the above-described needs.

An object of the present disclosure is to provide a technique that achieves both prompt operation of the receiver and stable continuation of operation in the receiver to which wireless power is supplied.

### [Solution to Problem]

A receiver wirelessly receives transmitting power composed of AC signals, wherein the receiver includes a rectifying unit for rectifying transmitting power, a power management unit for managing a rectified voltage from the rectifying unit, a charging unit that is charged with an output voltage from the power management unit, and a control unit that operates with supply power from the charging unit and controls the entire receiver, wherein the charging unit includes a plurality of capacitors, and performs charging of one of the plurality of capacitors until a predetermined time from the start of receiving the transmitting power, and charges capacitors other than the one capacitor after the predetermined time.

### [Advantageous Effects of Invention]

According to the present disclosure, it is possible to provide a technique that achieves both prompt operation of a receiver and stable continuation of operation in a receiver to which wireless power is supplied.

### [Brief Description of Drawings]

FIG. 1 is a diagram illustrating an entire configuration of a wireless power supply system (WPT system) according to a first embodiment.
FIG. 2 is a block diagram illustrating a configuration example of a transmitter and a receiver.
FIG. 3 is a diagram illustrating an outline of a circuit configuration of a receiver according to a first embodiment;
FIG. 4 is a diagram illustrating a time transition of a power supply voltage of a charging unit in a receiver according to a first embodiment.
FIG. 5 is a diagram illustrating an outline of a circuit configuration of a receiver according to a second embodiment.

### [Description of Embodiments]

Hereinafter, embodiments of the present disclosure will be described with reference to the drawings. In all the drawings describing the embodiments, the same components are denoted by the same reference numerals, and repeated description thereof is omitted. Note that the following embodiments do not unduly limit the contents of the present disclosure described in the claims. In addition, not all of the constituent elements shown in the embodiments are necessarily essential constituent elements of the present disclosure. In addition, the drawings are schematic diagrams, and are not necessarily strictly illustrated.

In the following description, a "processor" is one or more processors. The at least one processor is typically a microprocessor such as CPU (Central Processing Unit), but may be other types of processors such as GPU (Graphics Processing Unit). The at least one processor may be single-core or multi-core.

Also, the at least one processor may be a processor in a broad sense, such as hardware circuitry (e.g., FPGA (Field-Programmable Gate Array) or ASIC (Application Specific Integrated Circuit) that performs some or all of the processes.

Further, in the following explanation, information in which an output is obtained with respect to an input is sometimes described by expressions such as "xxx table", but this information may be data of any structure or a learning model such as a neural network that generates an output with respect to an input. Therefore, the "xxx table" can be referred to as "xxx data".

Further, in the following description, the configuration of each table is an example, and one table may be divided into two or more tables, or all or a part of two or more tables may be one table.

Further, in the following description, the processing is sometimes described using a "program" as a subject, but the program is executed by a processor, so that the defined processing is performed by appropriately using a storage unit, an interface unit, or the like, so that the subject of the processing may be a processor (or a device such as a controller having the processor).

The program may be installed in a device such as a computer, or may be in a program distribution server or a computer-readable (e.g., non-transitory) recording medium. In the following description, two or more programs may be implemented as one program, or one program may be implemented as two or more programs.

In the following description, an identification number is used as identification information of various objects, but identification information of a type other than the identification number (for example, an identifier including an alphabetic character or a code) may be adopted.

In addition, in the following description, when elements of the same kind are described without being distinguished, reference numerals (or common symbols among reference numerals) are used, and when elements of the same kind are distinguished and described, identification numbers (or reference numerals) of the elements may be used.

In the following description, the control lines and the information lines indicate those considered necessary for explanation, and not necessarily all control lines or information lines of an actual product are shown. All configurations may be interconnected.

### (0. System Overview)

WPT system according to the present disclosure includes a receiver that receives power transmitted from a transmitter and supplies the power to a device based on a wireless power supply method.

Although described in detail in the first embodiment, in the WPT system according to the present disclosure, microwave power (substantially continuous continuous wave (CW) of 920MHz) is received by an antenna of a receiver, and a radio wave is converted into a DC voltage by a rectifier circuit functionally connected to the antenna. The DC voltage output from the rectifier circuit is supplied to the charging unit (mainly the capacitor) after the voltage is controlled by the power management unit.

There is no particular limitation on the power storage element that comprises the charging unit, and examples include a capacitor, a lithium-ion battery, an electrical double-layer capacitor, a ceramic capacitor, and the like. In WPT system according to the present disclosure, the charging unit will be described as mainly including a capacitor.

The voltage supplied from the power management unit is supplied to the charging unit when the voltage stored in the charging unit is less than a predetermined value. When the charging unit is charged up to a predetermined voltage, the electric power supplied from the electric power management unit is supplied to a microcontroller.

Here, the operating power of the microcontroller that performs overall control of the receiver in the wireless power supply depends on the microwave power received by the receiver. Further, in WPT system of the present disclosure, the charging unit is mainly provided with a capacitor, and therefore, at the beginning of the wireless power supply from the transmitter, an adequate voltage for operating the microcontroller is not accumulated in the charging unit. For this reason, it is desirable that a sufficient voltage is accumulated in the charging unit as early as possible from the start of wireless power supply from the transmitter, and the microcontroller is operated at an early stage.

In consideration of this viewpoint, it is preferable to reduce the capacitance (hereinafter, simply referred to as "capacity") of the capacitor constituting the charging unit to rapidly charge the charging unit to accumulate a predetermined voltage in the capacitor.

On the other hand, in the wireless power supply, since the power supply condition depends on the environment, it is difficult to stably supply a constant amount of power, and the amount of power supply greatly fluctuates over time. In addition, the amount of power supply can also vary similarly in the wireless power supply of a solar cell or a laser system. Even in such a situation where the power supply condition is not stable, it is necessary to continue stable power supply to the microcontroller of the receiver and the sensor device of the receiver.

In consideration of this viewpoint, it is preferable to increase the capacitance of the capacitor constituting the charging unit so that stable power supply to the microcontroller and the like can be continued as much as possible even if a change occurs in the power supply condition.

As described above, regarding the capacitance of the capacitor constituting the charging unit in the WPT system of the present disclosure, there exist in a sense conflicting viewpoints as mentioned above, and these are in a trade-off relationship.

Therefore, in the WPT system according to the present disclosure, a plurality of capacitors are provided in the charging unit of the receiver, and charging of one of the plurality of capacitors is performed from the start of wireless power supply from the transmitter (the start of receiving of the transmitting power) up to a predetermined period of time, and charging is performed until the operation power of the microcontroller or the like can be secured. Then, after a predetermined period of time has elapsed, the capacitor other than one capacitor is also charged to increase the capacity of the entire charging unit to perform charging. Thus, stable power supply to the microcontroller or the like can be performed, and even if the power supply condition from the transmitter changes, the power supply to the microcontroller or the like can be stably continued.

In this case, it is preferable that the capacity of the one capacitor is equal to or smaller than that of the other capacitor (hereinafter, referred to as "another capacitor"). Accordingly, it is possible to charge the microcontroller or the like more quickly until the operation power can be secured during a predetermined time from the start of receiving the transmitting power, and as a result, it is possible to start the operation of the receiver more quickly. On the other hand, by making the capacitance of another capacitor equal to or larger than the capacitance of one capacitor, if another capacitor is sufficiently charged after a predetermined time has elapsed, the power supply to the microcontroller or the like can be more stably continued even if the power supply condition from the transmitter changes.

It should be understood that the specific configuration of the WPT system according to the present disclosure is not limited to the configuration described above.

### (1. 1^{st} embodiment)

### (1.1 Configuration of the entire system)

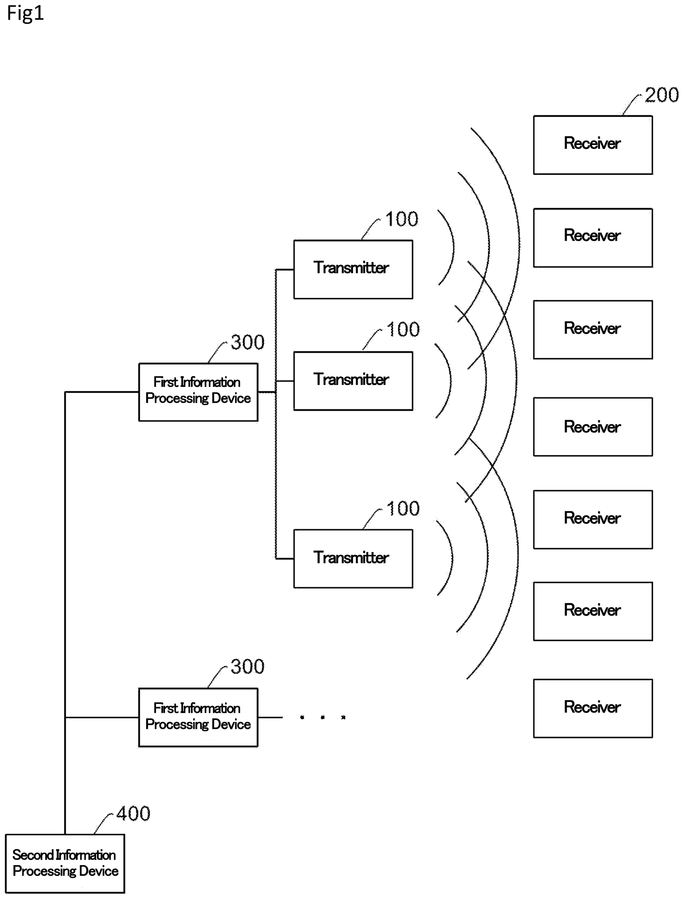

FIG. 1 is a diagram showing an entire configuration of a WPT system 1 according to a first embodiment.

As shown in FIG. 1, the WPT system 1 includes, for example, a transmitter 100, a receiver 200, a first information processing device 300, and a second information processing device 400. The WPT system 1 shown in FIG. 1 is used, for example, in a building or a factory.

Note that in this specification, the transmitter 100 is a (electric power) transmitter 100 in the sense of transmitting power wirelessly, and similarly, the receiver 200 is a (electric power) receiver 200 in the sense of receiving power wirelessly. As described below, the transmitter 100 may transmit, for example, information regarding the state of the receiver 200 or information regarding the measurement results by a sensor as data signals to the transmitter 100, and the transmitter 100 may receive such data signals. In this case, the transmitter 100 is a receiver that receives a data signal, and the receiver 200 functions as a transmitter that transmits a data signal.

In FIG. 1, WPT system 1 includes three transmitters 100, but the number of transmitters 100 included in WPT system 1 is not limited to three transmitters. The number of transmitters 100 included in WPT system 1 may be two or less, or four or more.

In FIG. 1, WPT system 1 includes seven receivers 200, but the number of receivers 200 included WPT system 1 is not limited to seven. The number of receivers 200 included in WPT system 1 may be six or less, or eight or more.

In FIG. 1, WPT system 1 includes two first information processing apparatus 300, but the number of first information processing devices 300 included in WPT system 1 is not limited to two. The number of the first information processing device 300 included in WPT system 1 may be one or three or more.

The transmitter 100 transmits, for example, a power supply signal or a data signal to the receiver 200. The transmitter 100 transmits a power supply signal to the receiver 200 by, for example, a radio wave of a 920MHz band. The transmitter 100 transmits a data-signal to the receiver 200 by, for example, a radio wave in a 2.4GHz band. The transmitter 100 may transmit the data-signal by radio waves in a 920MHz band.

The transmission signal transmitted from the transmitter 100 may be, for example, a continuous wave (CW) having a predetermined power. In addition, the frequency band of the power transmission signal is, for example, a 920MHz band in consideration of the distance between the transmitter 100 and the receiver 200. If the frequency band is higher than the exemplified frequency band, if the distance between the transmitter 100 and the receiver 200 is not shortened, there is a possibility that the receiver 200 cannot supply a predetermined power operable, and therefore an appropriate frequency band can be determined in consideration of a practical range (for example, the distance between the transmitter 100 and the receiver 200 is several meters).

In this case, WPT system 1 may be installed in a state in which the power transmission signal is intermittently transmitted. As an example, when a transmission signal from the transmitter 100 falls under the provisions of a Radio wave station prescribed in the Radio Law of Japan (whether or not there is a license), it may be necessary to provide a fixed pause period for the transmission signal based on the Radio Law. In this case, the transmission signal cannot be said to be a continuous wave when considered on a certain time axis. However, since it is necessary to provide a pause period, and this pause period is sufficient if it is small, the transmission signal transmitted from the transmitter 100 can be regarded as a substantially continuous wave. The method of setting the rest period itself can be arbitrarily selected. That is, if there are the above-mentioned legal restrictions or the like, an arbitrary pause period may be provided to the extent that this restriction or the like is complied with. Further, if it is necessary to provide a pause period in order to increase the temperature of the transmitter by continuously operating the transmitter, it is sufficient to provide an arbitrary pause period for keeping the temperature of the transmitter constant. The term "arbitrary" as used herein means that the time width of the pause period itself, the timing when the pause period is repeated (whether it is periodic or not may be based on legal restrictions, etc.) and the like can be arbitrarily set.

For example, the transmitter 100 may supply power to one receiver 200 or a plurality of receivers 200. For example, the transmitter 100 may transmit a data signal to one receiver 200 or may transmit a data signal to a plurality of receivers 200. The transmitter 100 may transmit the same data signal as another transmitter 100 or may transmit a different data signal than another transmitter 100, for example. For example, the transmitter 100 may transmit a predetermined command signal as a data signal to the receiver 200, or may transmit a preset signal as a data signal to the receiver 200.

The transmitter 100 receives, for example, a data signal transmitted from the receiver 200. For example, the transmitter 100 may receive data signals transmitted from one receiver 200 or may receive data signals transmitted from a plurality of receivers 200. The transmitter 100 transmits the data signal transmitted from the receiver 200 to the first information processing device 300. The transmitter 100 transmits information relating to the state of the transmitter 100 to the first information processing device 300.

The receiver 200 receives, for example, a power supply signal and/or a data signal transmitted from the transmitter 100. For example, in a case where the receiver 200 has a charging unit, the receiver 200 converts the power supply signal transmitted from the transmitter 100 into converted electric power, and stores the converted power in the charging unit. For example, when the receiver 200 has a predetermined sensor, the receiver 200 converts the power supply signal transmitted from the transmitter 100 into power, and drives the sensor with the converted power.

The receiver 200 transmits, for example, information regarding the state of the receiver 200 or information regarding the measurement result by the sensor to the transmitter 100 as a data signal.

The first information processing device 300 is an information processing device that monitors the operation of the transmitter 100 and the receiver 200 accommodated in the WPT system 1. For example, the first information processing device 300 determines whether or not the transmitter 100 or the receiver 200 is in a preset state, based on information relating to the state of the transmitter 100 and the receiver 200 transmitted from the transmitter 100. When it is determined to be in a preset state, the first information processing apparatus 300 transmits predetermined information to the second information processing device 400.

Further, the first information processing device 300 stores information on the transmitter 100 and the receiver 200 accommodated in the WPT system 1. For example, the first information processing device 300 stores information relating to the state of the transmitter 100 and the receiver 200 transmitted from the transmitter 100 in a storage unit provided in the first information processing device 300.

Further, the first information processing device 300 controls the operation of the transmitter 100 accommodated in the WPT system 1.

The second information processing device 400 is an information processing device operated by an administrator of the WPT system 1. When the second information processing device 400 receives, from the first information processing device 300, a notification indicating that the transmitter 100, the receiver 200, or both of them accommodated in the WPT system 1 are in a predetermined condition, the second information processing device 400 presents to the user that the transmitter 100, the receiver 200, or both of them are in the predetermined state.

Further, the second information processing apparatus 400 analyzes information relating to the state of the transmitter 100 and the receiver 200 stored in the first information processing apparatus 300, and presents predetermined information to the user. The predetermined information includes:
- Information on the arrangement of the transmitter 100
- Information on the arrangement of the receiver 200
- Information on power consumption
- Information on power intensity

### (1.2 Configuration of Transmitter and Receiver)

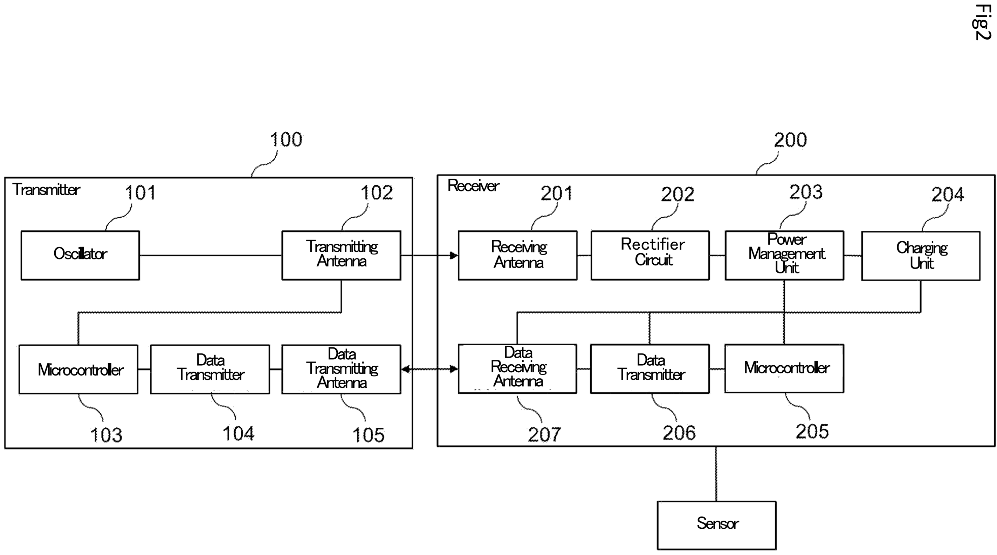

FIG. 2 is a block diagram showing an example configuration of the transmitter 100 and the receiver 200 shown in FIG. 1. As shown in FIG. 2, the transmitter 100 and the receiver 200 are, for example, separated from each other by a predetermined interval. For example, the transmitter 100 and the receiver 200 are installed at a distance of about several meters apart. Specifically, for example, the transmitter 100 is fixed and installed at a high position indoors, such as on a ceiling or a predetermined high position provided on a wall. The receiver 200 is installed on a predetermined device indoors or placed near a device that requires power supply. The receiver 200 may also be carried by a user. The transmitter 100 transmits a power supply signal to the receiver 200 using a radio wave of a predetermined frequency, for example, in the 920MHz band. The receiver 200 converts the power supply signal transmitted from the transmitter 100 into electric power, and either charges the converted power or supplies the converted power to a predetermined device.

The transmitter 100 includes, for example, an oscillator 101, a transmitting antenna 102, a microcontroller (controller) 103, a data transceiver 104, and a data transmission/reception antenna 105. The oscillator 101, the microcontroller 103, and the data transceiver 104 may be mounted on, for example, a PCB (printed circuit board).

The oscillator 101 oscillates a signal in a predetermined frequency band, for example, the 920MHz band. The oscillated signal may be amplified and unnecessary frequency components may be removed, as necessary.

For example, the transmitting antenna 102 is formed to efficiently transmit radio waves in the 920MHz band. The transmitting antenna 102 radiates the signal oscillated by the oscillator 101 as a power supply signal.

The microcontroller 103 controls the operation of the transmitter 100. The microcontroller 103 is realized, for example, by a semiconductor device equipped with an ARM processor. For example, the microcontroller 103 controls transmission of radio waves by the transmitting antenna 102.

For example, in a WPT system 1 used in a factory, it is desirable for the receiver 200 to supply power exceeding a predetermined value or more. Therefore, the microcontroller 103 controls the transmission of radio waves by the transmitting antenna 102 based on a feedback signal transmitted from the receiver 200. The feedback signal relates to, for example, a voltage value at a predetermined portion of the receiver 200. Based on the feedback signal, the electric field strength of the receiver 200 can be pseudo-recognized. When the transmitting antenna 102 includes, for example, a plurality of antenna elements, the microcontroller 103 controls the transmitting antenna 102 so as to transmit the power supply signal from, for example, an optimal antenna element. For example, the microcontroller 103 adjusts the polarization direction of the power supply signal by switching the antenna elements to be driven. Further, the microcontroller 103 also adjusts the driving timing of the antenna element to adjust the direction of the power supply signal.

Further, in a WPT system 1 used in a room such as a building, the microcontroller 103 controls transmission of radio waves by the transmission antenna 102 based on a feedback signal transmitted from the receiver 200. When the transmitting antenna 102 is, for example, a single antenna element, the microcontroller 103 optimizes the power transmission output from the transmitting antenna 102.

The data transceiver 104 performs processing such as analog conversion of digital data and modulation of analog data. Further, the data transceiver 104 performs processing such as demodulation of a signal extracted from data signals received by the data transmitting/receiving antenna 105, digitization of demodulated analog data, and the like. For example, the data transceiver 104 extracts a feedback signal from the data signal received by the data transmitting/receiving antenna 105, converts the feedback signal into digital data, and transmits the digital data to the microcontroller 103.

For example, the data transmitting/receiving antenna 105 is formed to efficiently transmit and receive radio waves in the 2.4GHz band, for example. The data transmitting/receiving antenna 105 emits the data signal supplied from the data transceiver 104. Further, the data transmitting/receiving antenna 105 receives a data signal transmitted from the receiver 200.

The receiver 200 includes, for example, a receiving antenna 201, a rectifier circuit 202, a power management unit 203, a charging unit 204, a microcontroller 205, a data transceiver 206, and a data transmission/reception antenna 207. The rectifier circuit 202, the power manager 203, the charging unit 204, the microcontroller 205, and the data transceiver 206 may be mounted on, for example, a PCB or a FPC (flexible printed circuit).

For example, the reception antenna 201 is formed to efficiently receive radio waves in the 920MHz band. The receiving antenna 201 receives the power supply signal radiated from the transmitting antenna 102.

The rectifier circuit 202 rectifies a radio wave received as a power supply signal and converts the rectified radio wave into a DC voltage.

The power management unit 203 manages the DC voltage. For example, the power management unit 203 controls a charging voltage based on the DC voltage. The power management unit 203 charges the charging unit 204 by controlling the charging voltage. In addition, the power management unit 203 supplies the DC voltage to a member to be connected, for example, when electric power of a predetermined capacity or more is stored in the charging unit 204.

In addition, the power management unit 203 causes the electric power stored in the charging unit 204 to be discharged in response to control from the microcontroller 205.

The charging unit 204 stores power in response to an instruction from the power management unit 203. In addition, the charging unit 204 also emits the stored power in response to an instruction from the power management unit 203. Details of the configuration of the charging unit 204 will be described later.

The microcontroller 205 (hereinafter, sometimes referred to as an MCU (Microcontroller as appropriate) controls the operation of the receiver 200. The microcontroller 205 is driven by the DC voltage supplied from the power management unit 203 or by power stored in the charging unit 204. The microcontroller 205 controls the power management unit 203 and causes the power stored in the charging unit 204 to be discharged.

Various sensors are connectable to the receiver 200, for example. For example, a heat sensor, a temperature sensor, an optical sensor, a humidity sensor, a vibration sensor, etc. are connected to the receiver 200. A sensor connected to the receiver 200 is driven by, for example, the DC voltage supplied from the power management unit 203 or by power emitted from the charging unit 204. The microcontroller 205 continuously or intermittently monitors a voltage value at a predetermined portion of the receiver 200, a status of a sensor connected to the receiver 200, information detected by the sensor, and the like. The microcontroller 205 transmits, as digital data, a voltage value at a predetermined portion of the receiver 200, the status of a sensor connected to the receiver 200, information detected by the sensor, and the like to the data transceiver 206.

The data transceiver 206 performs processing such as analog conversion of digital data supplied from the microcontroller 205 and modulation of analog data. Further, the data transceiver 206 performs processing such as demodulation of analog data, digitization of demodulated analog data, and the like. The data transceiver 206 is driven by, for example, the DC voltage supplied from the power management unit 203 or by power emitted from the charging unit 204.

For example, the data transmitting/receiving antenna 207 is formed so as to efficiently transmit and receive radio waves in the 2.4-GHz band. The data transmitting/receiving antenna 207 emits a data signal supplied from the data transceiver 206. Further, the data transmitting/receiving antenna 207 receives a data signal transmitted from the transmitter 100. For example, the data transmitting/receiving antenna 207 is driven by, for example, the DC voltage supplied from the power management unit 203 or by power emitted from the charging unit 204.

The transmission format of the data signal transmitted (radiated) from the data transmitting/receiving antenna 207 is arbitrary. In particular, since the data signal radiated from the data transmitting/receiving antenna 207 is a radio wave in the 2.4 GHz band, it may be a signal conforming to the Bluetooth (registered trademark) or IEEE 802.11x (i.e., so-called wireless LAN) format. In this case, it is preferable that the data transceiver 104 of the transmitter 100 also has a function of analyzing a data signal whose format matches the format of the data signal transmitted from the receiver 200. Alternatively, the first information processing apparatus 300 may have such a function.

### (1.3 Circuit Configuration of Receiver)

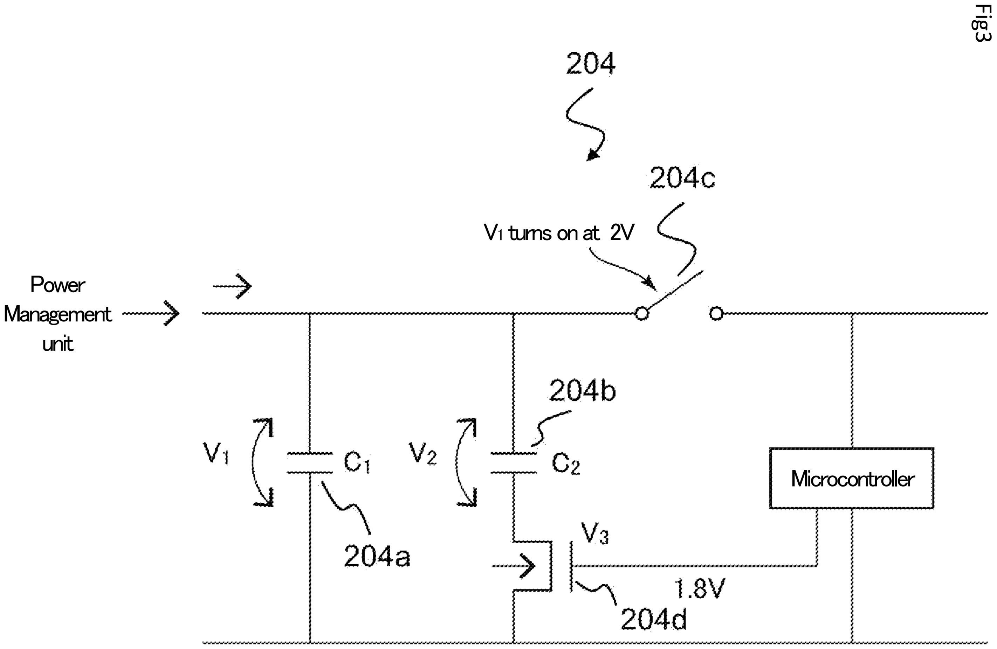

FIG. 3 is a diagram schematically showing a circuit configuration of the receiver 200 shown in FIG. 2. In the following description, detailed description of the constituent elements of the receiver 200 described with reference to FIG. 2 will be omitted. In addition, only a main part of the components of the receiver 200 shown in FIG. 2 is illustrated.

As shown in FIG. 3, the charging unit 204 constituting the receiver 200 of the present embodiment has two capacitors 204a (C₁), 204b(C₂) connected in parallel. The capacitance C₁, C₂ of each capacitor 204a, 204b is selected so that the capacitance C₁ of the capacitor 204a is equal to or smaller than the capacitance C₂ of the capacitor 204b. Here, the capacitor 204a corresponds to "one capacitor" described above, and the capacitor 204b corresponds to "another capacitor" described above.

How to set the value of the capacitance C₁ of the capacitor 204a may be determined by how quickly the receiver 200 is to be brought in to an operable state, in other words, by how long the microcontroller 205 or the like can operate stably after starting power reception from the transmitter 100. In addition, how much the capacitance C₂ of the capacitor 204b is set may be determined based on whether or not the stable operation of the receiver 200 (mainly, the microcontroller 205 or the like) is to be ensured even if the power reception status of the receiver 200 becomes unstable.

As a method of setting the capacitance C₁, C₂ of the capacitors 204a, 204b, for example, a method in which the capacitor 204b is constituted by an electric double-layer capacitor and the capacitor 204a is constituted by a ceramic capacitor or the like is exemplified. The ceramic capacitor can be miniaturized and serves to optimize the board occupation area of the charging unit 204. On the other hand, an electric double-layer capacitor has a large capacity, and is preferably used to stabilize the power supply to a microcontroller or the like. Naturally, there is no particular limitation on the difference in capacity or the type of the capacitors 204a, 204b, and it may be determined as appropriate depending on what kind of operation is expected from the charging unit 204 (that is, how much rapid charging and stability of power supply are expected).

The charging unit 204 also has a switch 204c interposed in a power supply path from the capacitor 204b to the microcontroller 205, and a field-effect transistor (FET) 204d interposed in the grounding-side path of the capacitor 204b. These switch 204c and the field-effect transistor 204d constitute a first current control unit that adjusts the supply current to the capacitor 204b.

At the beginning of receiving power from the transmitter 100, the switch 204c is in an OFF state. The power management unit 203 monitors an inter-terminal voltage V₁ of the capacitor 204a, and when the inter-terminal voltage V₁ reaches a constant value (for example, 2V), the switch 204c is turned ON by an instruction from the power management unit 203. The voltage at which the switch 204c is turned ON need not be a voltage enough to stably operate the microcontroller 205, and may be a voltage at which the microcontroller 205 can start operating.

The gate terminal of the field-effect transistor 204d is connected to the microcontroller 205, and controls the charging current supplied to the capacitor 204b by a gate voltage supplied from the microcontroller 205. When the microcontroller 205 does not have a terminal capable of finely adjusting the voltage value of the gate voltage (for example, it does not have an analog output terminal), a voltage adjuster (not shown) may be provided between the microcontroller 205 and the field-effect transistor 204d. The microcontroller 205 may send a command for analog control of the gate voltage of the field-effect transistor 204d to the voltage adjuster, and the voltage adjuster may perform analog control of the gate voltage.

In the present embodiment, the charging current supplied to the capacitor 204b is controlled by the field-effect transistor 204d, but the charge current supplied to the capacitor 204b may be controlled by another device, for example, a bipolar transistor. In this case, the microcontroller 205 may control the base current of the bipolar transistor.

### (1.5 Operation Example)

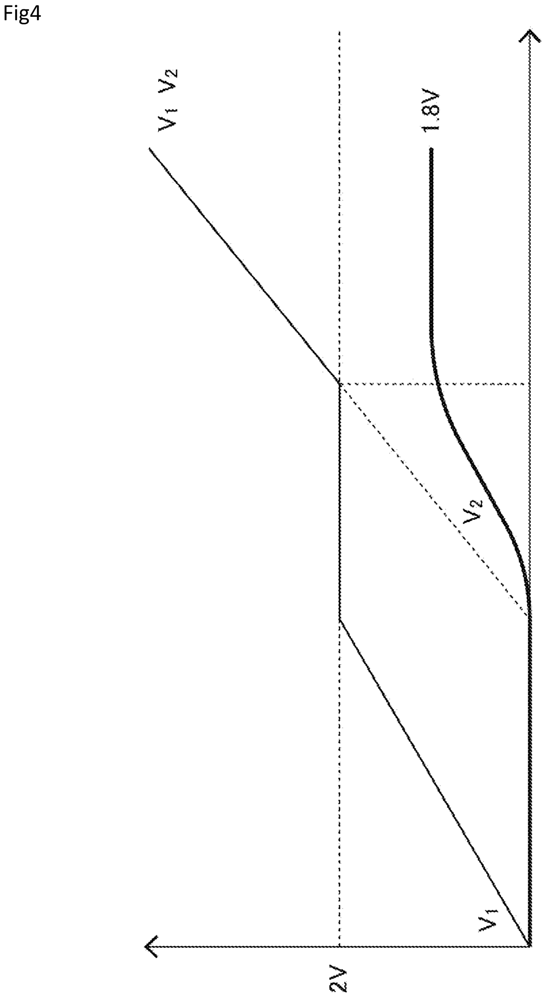

Hereinafter, an example of the operation of the receiver 200 of the present embodiment will be described with reference to FIG. 3 and FIG. 4.

When the supply of the power feeding power from the transmitter 100 to the receiver 200 is started, in other words, when transmission of the wireless power supply signal, which is a substantially continuous continuous wave, from the transmitter 100 toward the receiver 200 is started, the receiving antenna 201 of the receiver 200 receives the wireless power supply signal, the wireless power supply signal, which is a received AC signals, is converted into the DC voltage by the rectifier circuit 202, and a charging voltage for charging the charging unit 204 is supplied to the charging unit 204 by the power management unit 203.

At this point, since the switch 204c of the charging unit 204 is still an OFF state, the output voltage from the power managing unit 203 is supplied entirely to the capacitor 204a, and only the capacitor 204a is charged. As shown in FIG. 4, the inter-terminal voltage V₁ between the terminals of the capacitor 204a increases. On the other hand, since the output voltage from the power manager 203 is not supplied to the capacitor 204b, the capacitor 204b is not charged, and the voltage V₂ between the terminals of the capacitor 204b remains zero.

As described above, immediately after the start of supply of power feeding power from the transmitter 100 to the receiver 200, only one capacitor 204a among the capacitors 204a, 204b constituting the charging unit 204 is charged. The capacitor 204a is rapidly charged since the capacitance C₁ of the one capacitor 204a is set to be equal to or smaller than the capacitance C₂ of another capacitor. This state is continued only for a period until the switch 204c is turned ON (i.e., for a predetermined period of time).

Accordingly, since the capacitor 204a can be sufficiently charged in a short time, the time from the start of the wireless power supply from the transmitter 100 to the turning-ON of the switch 204c can be kept short, and consequently, the time from the start of the wireless power supply from the transmitter 100 to the start of the operation of the microcontroller 205 or the like can be shortened.

Next, when the inter-terminal voltage V₁ between the terminals of the capacitor 204a exceeds a predetermined value, the power managing unit 203 turns ON the switch 204c. As a result, the charging voltage is supplied to any of the capacitors 204a, 204b constituting the charging unit, and the charging is performed for any of the capacitors 204a, 204b.

However, when the charge to any capacitors 204a, 204b is started by turning ON the switch 204c, it is expected that the inter-terminal voltage V₁ and V₂ between terminals of the capacitor 204a and 204b temporarily decrease, and the supply voltage to the microcontroller 205 falls below a voltage at which the microcontroller 205 can continue operation.

Therefore, when the switch 204c is turned ON and the supply of operating voltage is started, the microcontroller 205 gradually increases a gate voltage V₃ of the field-effect transistor 204d as shown in FIG. 4 thereby gradually decreasing a resistance value of the field-effect transistor 204d. As a result, the supply current to the capacitor 204b is gradually increased, and the capacitor 204b is gradually charged.

Thereafter, when the gate voltage of the field effect transistor 204d rises to a certain value (1.8V in FIGS. 3 and 4), the resistance value of the field effect transistor 204d becomes minimum, and a combined voltage value V₁+V₂of the inter-terminal voltages of the capacitor 204a and 204b increases.

Thus, since both of the capacitor 204a and 204b are sufficiently charged, even if the wireless power supply signal from the transmitter 100 temporarily interrupted (for example, a person intervenes between the transmitter 100 and the receiver 200) and the power supply state of the receiver 200 deteriorates, the capacitor 204b having a large capacitance is sufficiently charged, so that the operation of the microcontroller 205 or the like can be continued by power supply from the capacitor 204b until the power supply state is restored.

### (1.6 Advantageous Effects of 1^{st} Embodiment)

As described above, according to the WPT system 1 of the present embodiment, in the receiver 200 that is wireless powered, both the quick operation of the receiver 200 and stable continuation of operation can be achieved.

### (2. 2^{nd} Embodiment)

In the WPT system 1 of the first embodiment described above, by turning ON the switch 204c after a predetermined time has elapsed from the start of the wireless power supply from the transmitter 100, the supply of a charging voltage of the other capacitor 204b is performed after a predetermined time, thereby rapidly charging the one capacitor 204a. In the WPT system 1 according to the second embodiment, by making a current supplied to the other capacitor smaller than a current supplied to the one capacitor, the time until completion of charging of the one capacitor is made earlier than the time until completion of charging of the other capacitor.

### (2.1 Circuit Configuration of Receiver)

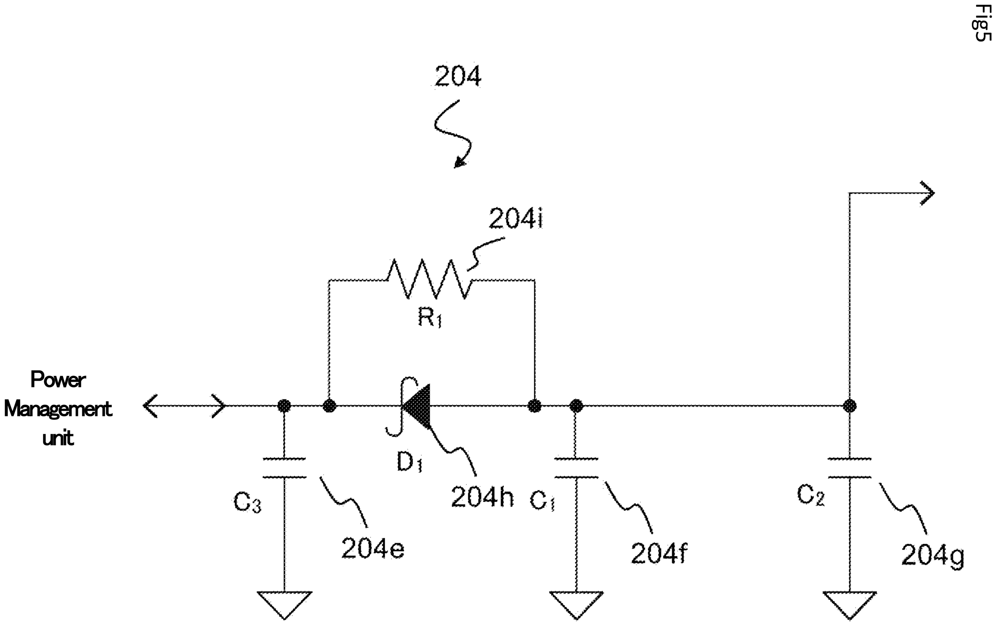

FIG. 5 is a circuit diagram showing a configuration of the charging unit 204 of the receiver 200 in the WPT system 1 according to the second embodiment.

The charging unit 204 according to the second embodiment shown in FIG. 5 has three capacitors 204e (C₃), 204f(C₁), and 204g(C₂) connected in parallel. The capacitances C₁, C₂, C₃ of the respective capacitors 204e to 204g are selected so that the capacitance C₃ of the capacitor 204e is equal to or smaller than the capacitance C₁ of the capacitor 204f and the capacitance C₂ of the capacitor 204g. Here, the capacitor 204e corresponds to "one capacitor" described above, and the capacitors 204f, 204g correspond to the "other capacitors" described above.

As a method of setting the capacitances C₁, C₂, C₃ of the capacitors 204e to204g, for example, similarly to the first embodiment, a method is mentioned in which the capacitors 204f and 204g are constituted by electric double-layer capacitors and the capacitor 204e is constituted by a ceramic capacitor or the like. In the charging unit 204 of the present embodiment, the capacitance C₁ of the capacitor 204e and the capacitance C₂ of the capacitor 204g are set to be the same capacitance, but the capacitance C₁, C₂ may be large or small. At least the capacitance C₁, C₂ may be larger than the capacitance C₃ of the capacitor 204e.

A Zener diode 204h and a resistor 204i are interposed in parallel and in the charging power supply path for the capacitors 204e and 204f.

The Zener diode 204h is connected in a so-called reverse direction. That is, the cathode of the Zener diode 204h is connected to the side of the capacitor 204e, and the anode is connected to the side of the capacitor 204f. This Zener diode 204h limits the charging power supplied to the capacitor 204f and 204g to the path via the resistor 204i until the charging voltage supplied to the capacitor 204f and 204g reaches a certain value, i.e., until it reaches the breakdown voltage. Therefore, the breakdown voltage of the Zener diode 204h is set to a voltage value (e.g., 2V) which is the condition under which the switch 204c is turned ON in the case of the first embodiment, or to a value slightly below this voltage value.

The resistor 204i is provided so that the charging current to the capacitors 204f and 204g is made smaller than the charging current of the capacitor 204e until the charging voltage supplied to the capacitor 204f, 204g reaches a certain value. Therefore, a resistance value R₁ of the resistance 204i is set from the viewpoint of how long the charging of the capacitors 204f and 204g is to be completed from the start of wireless power supply from the transmitter 100.

These Zener diode 204h and resistor 204i constitute a second current control unit and a current limiting element that makes a supply current to the capacitors 204f and 204g smaller than a supply current to the capacitor 204e until the charging voltage supplied to the capacitors 204f and 204g reaches a certain value.

In the present embodiment, the Zener diode 204h and the resistor 204i are used as the second current control unit and the current limiting element, but any circuit configuration may be used as long as, during a period of time from the start of receiving the transmitting power from the transmitter 100 until a predetermined time, the charging current of the capacitors 204f and 204g is made smaller than the charging current of the capacitor 204e, and known configurations can be suitably applied. As an embodiment, a Schottky diode may be used instead of the Zener diode 204h.

### (2.2 Operation Example)

Hereinafter, an example of the operation of the receiver 200 of the present embodiment will be described with reference to FIG. 5.

Similarly to the case of the first embodiment, when wireless power supply from the transmitter 100 is started, a DC voltage from the power managing unit 203 is supplied to the capacitor 204e, and charging of the capacitor 204e is started. At this time, the DC voltage from the power manager 203 is used as a charging voltage for the capacitor 204e, and since the voltage applied to the Zener diode 204h does not exceed the breakdown voltage, charging power is supplied to the capacitors 204f and 204g only via the resistor 204i. The current value of this charging power is a current corresponding to the resistance value R₁ of the resistor 204i, and is smaller than the current value of the charging power to the capacitor 204e. Therefore, the charging of the capacitors 204f and 204g proceeds more slowly than the charging of the capacitor 204e.

Thereafter, when the charging of the capacitor 204e progresses (that is, after a predetermined time has elapsed), the voltage applied to the Zener diode 204h exceeds the breakdown voltage, and charging power is supplied to the capacitors 204f and 204g via a path through the Zener diode 204h together with a path through the resistor 204i. Since by this time the charging of the capacitor 204e has already progressed considerably, the charging power supplied from the power managing unit 203 is mainly used for charging the capacitors 204f and 204g.

Accordingly, since the capacitor 204e can be sufficiently charged in a short time, the time from the start of wireless power supply from the transmitter 100 until the voltage applied to the Zener diode 204h exceeds the breakdown voltage can be kept short, and consequently, the time from the start of wireless power supply from the transmitter 100 until the start of operation of the microcontroller 205 or the like can be shortened.

Further, when the voltage to the Zener diode 204h exceeds the breakdown voltage, since the charging power is supplied to all of the capacitors 204e to 204g, even if the wireless power supply signal from the transmitter 100 is temporarily interrupted (for example, a person intervenes between the transmitter 100 and the receiver 200) and the power supply state of the receiver 200 deteriorates, the capacitor 204f and 204g having large capacitance is sufficiently charged; therefore, the operation of the microcontroller 205 or the like can be continued by the power supply from the capacitors 204f and 204g, until the power supply state is restored. Moreover, even at a time when the voltage applied to the Zener diode 204h does not exceed the breakdown voltage, charging power is supplied to the capacitors 204f and 204g via the resistor 204i, so the capacitors 204f and 204g can be charged even at a time when the voltage applied to the Zener diode 204h does not exceed the breakdown voltage, and consequently, the time until the capacitors 204f and 204g is sufficiently charged can be shortened.

### (2.3 Advantageous Effects of 2^{nd} Embodiment)

As described above, according to the WPT system 1 of the present embodiment, similarly to the WPT system 1 of the first embodiment, in the receiver 200 that is wirelessly powered, both quick operation of the receiver 200 and stable continuation of operation can be achieved.

### (3. Addendum)

It should be noted that the embodiments described above have described the configuration in detail to explain the present disclosure in an easy-to-understand manner and are not necessarily limited to those having all of the configurations described. Further, some of the configuration of each embodiment may be added to, deleted from, or replaced with other configurations.

In addition, each of the above configurations, functions, processing units, processing means, and the like may be implemented in hardware, for example, by designing some or all of them as an integrated circuit. The present invention can also be realized by program code of software that realizes the functions of the embodiments. In this case, a storage medium in which the program code is recorded is provided to the computer, and the processor included in the computer reads the program code stored in the storage medium. In this case, the program code itself read from the storage medium realizes the functions of the above-described embodiment, and the program code itself and the storage medium storing the program code itself constitute the present invention. As a storage medium for supplying such a program code, for example, a flexible disk, a CD-ROM, DVD-ROM, a hard disk, a SSD, an optical disk, a magneto-optical disk, a CD-R, a magnetic tape, a nonvolatile memory card, a ROM, or the like is used.

In addition, the program code that realizes the functions of the embodiment can be implemented in a wide range of programs or script languages such as an assembler, C/C++, Perl, Shell, PHP, and Java (registered trademark), and the like.

Further, the program code of the software for realizing the functions of the embodiment may be distributed via a network and stored in a storage means such as a hard disk or a memory of a computer or a storage medium such as a CD-RW, CD-R, and the processor included in the computer may read and execute the program code stored in the storage means or the storage medium.

The matters described in the respective embodiments above are appended below.

### (Appendix 1)

A receiver (200) that wirelessly receives transmitting power composed of AC signals, the receiver (200) comprising: a rectifier (202) that rectifies the transmitting power; a power management unit (203) that manages a rectified voltage from the rectifier (202); a charging unit (204) that is charged with an output voltage from the power management unit (203); and a control unit that operates on a power supplied from the charging unit (204) and controls the entire receiver (200), wherein the charging unit (204) includes a plurality of capacitors (204a, 204b), and performs charging of one of the plurality of capacitors (204a) from the start of receiving the transmitting power until a predetermined time, and also charges another capacitor (204b) other than the one capacitor (204a) after the predetermined time.

### (Appendix 2)

The receiver according to Appendix 1, wherein a capacitance of the one capacitor (204a) is equal to or smaller than a capacitance of the other capacitor (204b).

### (Appendix 3)

The receiver (200) according to Appendix 2, wherein the charging unit (204) has a first current control unit (204c, 204d) that adjusts a supply current to the other capacitor (204b), and the first current control unit (204c, 204d), by adjusting the supply current to the other capacitor (204b), performs charging of the capacitor (204a) from the start of receiving the transmitting power until a predetermined time, and performs charging of the other capacitor (204b) after a predetermined time.

### (Appendix 4)

The receiver (200) according to Appendix 3, wherein the first current control unit (204c, 204d) is a field-effect transistor (204d), and controls the supply current to the other capacitor (204b) by controlling a current between a source and a drain of the field-effect transistor (204d).

### (Appendix 5)

The receiver (200) according to Appendix 4, wherein the control unit (205) controls the current between the source and the drain of the field-effect transistor (204d) by controlling a gate voltage of the field-effect transistor (204d).

### (Appendix 6)

The receiver (200) according to Appendix 5, wherein the control unit (205) monitors a charging voltage to the other capacitor (204b) and controls the current between the source and the drain of the field-effect transistor (204d) based on the charging voltage.

### (Appendix 7)

A receiver (200) that wirelessly receives transmitting power composed of AC signals, the receiver (200) comprising: a rectifier (202) that rectifies the transmitting power; a power managing unit (203) that manages a rectified voltage from the rectifier (202); a charging unit (204) that is charged with an output voltage from the power managing unit (203); and a control unit (205) that operates on power supplied from the charging unit (204) and controls the entire receiver (200), wherein the charging unit (204) includes a plurality of capacitors (204e to 204g), and the charging unit (204) includes a second current control unit (204h, 204i) that, during a period from the start of receiving the transmitting power until a predetermined time, makes a charging current of other capacitors (204f, 204g) among the plurality of capacitors (204e to 204g) less than a charging current of one capacitor (204e).

### (Appendix 8)

The receiver (200) according to Appendix 7, wherein the second current control unit (204h, 204i) is a current limiting device (204h, 204i) interposed between the one capacitor (204e) and the other capacitor (204f, 204g) in a charging power supply path for the plurality of capacitors (204e to 204g).

### (Appendix 9)

The receiver (200) according to Appendix 8, wherein a capacitance of one capacitor (204e) is equal to or smaller than capacitances of the other capacitor (204f, 204g).

### (Appendix 10)

A wireless power supply system (1) comprising a transmitter (100) that wirelessly transmits transmitting power composed of AC signals, and a receiver (200) that wirelessly receives the transmitting power, the receiver (200) comprising: a rectifier (202) that rectifies the transmitting power; a power management unit (203) that manages a rectified voltage from a rectifier (202); a charging unit (204) that is charged with an output voltage from the power management unit (203); and a control unit that operates on a power supplied from the charging unit (204) and controls the entire receiver (200), wherein the charging unit (204) includes a plurality of capacitors (204a, 204b), performs charging of one of the plurality of capacitors (204a) from the start of receiving the transmitting power until a predetermined time, and also charges another capacitor (204b) other than the one capacitor (204a) after the predetermined period of time.

### (Appendix 11)

A wireless power supply system (1) comprising a transmitter (100) that wirelessly transmits transmitting power composed of AC signals, and a receiver (200) that wirelessly receives the transmitting power, the receiver (200) comprising: a rectifier (202) that rectifies the transmitting power; a power management unit (203) that manages a rectified voltage from the rectifier (202); a charging unit (204) that is charged with an output voltage from the power management unit (203); and a control unit (205) that operates on power supplied from the charging unit (204) and controls the entire receiver (200), wherein the charging unit (204) includes a plurality of capacitors (204e to 204g), and the charging unit (204) includes a second current control unit (204h, 204i) that, during a period from the start of receiving the transmitting power until a predetermined time, makes a charging current of the other capacitors (204f, 204g) among the plurality of capacitors (204e to 204g) smaller than a charging current of one capacitor (204e).

### [Description of Symbols]

1... WPT system 100...transmitter 200...receiver 201...receiver antenna 202...rectifier circuit 203...power manager 204...charging unit 204a, 204b, 204e, 204f, 204g... capacitor 204c... switch 204d... field-effect transistor 204h... Zener diode 204i... resistor 205...microcontroller 206...data transceiver 207...data transceiver antenna 300...first information processing device 400...second information processing device

## Claims

1. A receiver for wirelessly receiving transmitting power composed of AC signals, the receiver comprising:
a rectifying unit that rectifies the transmitting power;
a power management unit that manages a rectified voltage from the rectifying unit;
a charging unit that is charged with an output voltage from the power management unit; and
a control unit that operates on a power supplied from the charging unit and controls an entirety of the receiver,
wherein the charging unit includes a plurality of capacitors, and the charging unit includes a second current control unit that makes a charging current of another capacitor among the plurality of capacitors smaller than a charging current of one capacitor during a period from a start of receiving the transmitting power to a predetermined time.

2. The receiver according to claim 1, wherein the second current control unit is a current limiting element interposed between the one capacitor and the other capacitor in a charging power supply path for the plurality of capacitors.

3. The receiver according to claim 1 or 2, wherein a capacitance of the one capacitor is equal to or smaller than a capacitance of the other capacitor.

4. A wireless power feeding system, comprising:
a transmitter that wirelessly transmits transmitting power composed of AC signals; and
a receiver that wirelessly receives the transmitting power, the receiver comprising a rectifying unit that rectifies the transmitting power, a power management unit that manages a rectified voltage from the rectifying unit, a charging unit that is charged with an output voltage from the power management unit, and a control unit that operates on power supplied from the charging unit to control an entirety of the receiver,
wherein the charging unit includes a plurality of capacitors, and the charging unit includes a second current control unit that makes a charging current of another capacitor among the plurality of capacitors smaller than a charging current of one capacitor during a period from a start of receiving the transmitting power to a predetermined time.
